# EUROPEAN PATENT SPECIFICATION

(11) **EP 3 323 659 B1**
(45) Date of publication and mention of the grant of the patent: **26.06.2019**
(21) Application number: 16199151.8
(22) Date of filing: 16.11.2016
(51) Int. Cl.: B60L 3/00, B60L 15/20, B60L 15/28, B60L 15/36, G06F 11/14, G06F 11/07

(54) **FAULT DETECTION IN ELECTRIC VEHICLES**
FEHLERERKENNUNG IN ELEKTRISCHEN FAHRZEUGEN
DÉTECTION DE PANNES POUR VÉHICULES ÉLECTRIQUES

(43) Date of publication of application: 23.05.2018
(73) Proprietor: Nio Nextev Limited, Hong Kong (HK)
(72) Inventor: LOWRIE, Jamie, London W1B 5AD (GB)
(74) Representative: Sackin, Robert

(56) References cited:
- US-A1- 2006 104 209
- US-A1- 2009 107 745
- US-A1- 2009 112 399
- US-A1- 2010 211 258
- Granite - origin3publplace: "PWM signal as setpoint", Internet Granite devices knowledge wiki, vol. 1, no. 1, 1, 24 June 2013 (2013-06-24), pages 1-3, XP055338442, Granite website Retrieved from the Internet: URL:http://granitedevices.com/w/index.php? title=PWM&oldid=1607 [retrieved on 2017-01-24]
- Eric Jacobsen ET AL: "Freescale Semiconductor - Application Note Using a PWM Output with Sensors", , 1 May 2005 (2005-05-01), XP055338448, Freescale Semiconductor Application Note Retrieved from the Internet: URL:http://www.nxp.com/assets/documents/da ta/en/application-notes/AN1518.pdf [retrieved on 2017-01-24]

## Description

### TECHNICAL FIELD

The present invention relates to fault detection in electric vehicles, and more particularly to fault detection in a torque control system of an electric car.

### BACKGROUND

Electric cars are equipped with sophisticated electronic systems for managing and controlling operations of the car. The electronic systems include distributed networks of electronic components, including electronic control units (ECUs), sensors, switches and actuators, communicating over multiplexed data networks such as a Controller Area Network (CAN). In order to ensure that the electronic systems are operating as intended, electric cars include on-board diagnostic systems to detect faults in the electronic systems, alert the driver to detected faults and to take steps to make the electric car safe in response to detected faults.

In some cases, a control signal sent between two electronic controllers, for example a CAN message, may not be received as intended due to a fault. Executing instructions based on control signals that are different to those intended can pose a serious safety issue, especially if the control signals affect steering or how power is delivered, for example. This is a particular problem for electric cars, where the power to be delivered to the one or more electric motors that powers the electric car is communicated using electronic control signals.

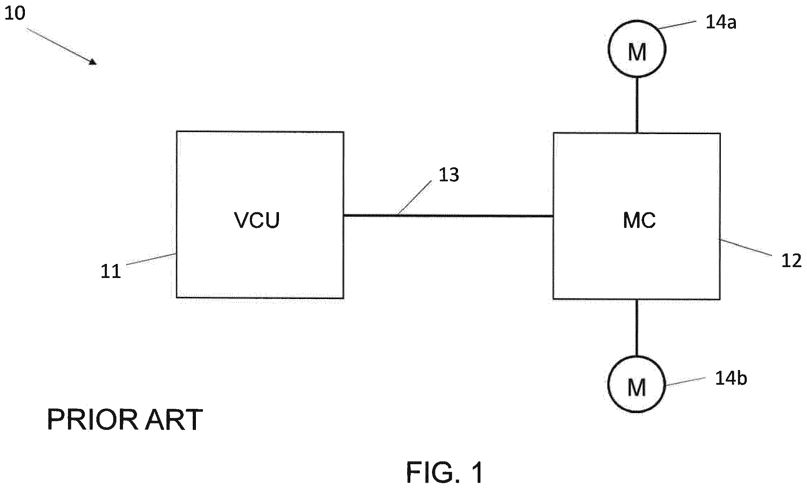

Figure 1 is a simplified diagram of a prior art electric-vehicle fault detection system. The system includes a first electric-vehicle controller 11 in the form of a vehicle control unit (VCU) that sends control signals to a second electric-vehicle controller 12 in the form of a motor controller (MC) over a connection 13. The control signals sent by the VCU 11 are determined based on the inputs the VCU 11 receives from other controllers, sensors and actuators (not shown). For example, the VCU 11 may receive an input originating from the accelerator pedal, determine how much torque should be delivered by the electric motors 14a, 14b based on the input, and send a control signal to the MC 12 based on this. The MC 12 interprets the control signals that it receives to determine instructions and then executes the instructions in order to, for example, deliver the desired torque from the electric motors 14a, 14b. The VCU or MC additionally performs fault detection to determine whether the control signals are being received by the MC as intended.

There are various known fault detection techniques which involve determining whether a control signal sent between the two vehicle controllers has been received as intended. Some known methods make use of check digits, for example cyclic redundancy checks (CRCs). A CRC involves transmitting signal data along with a short check value that is based on a calculation performed on the signal data. The receiver performs the same calculation on the received signal data and compares the resulting check value with the check value received with the signal data. A difference between the check values indicates that the received signal differs from the intended signal. Some other methods involve correlating two versions of a signal. For example, the transmitter end can correlate a locally generated copy of the intended signal with a reflection of the signal that it transmitted to the receiver end. In another example, the transmitter end sends two versions of the same signal via two different routes, and the receiver end can correlate the two signals.
Document US2009107745 discloses a method for monitoring integrity of a signal in a distributed system of monitoring different inputs and algorithms.
Document US2009112399 disclose another method for monitoring and verifying integrity of a signal communicated in a distributed control system.

### SUMMARY OF THE INVENTION

It is an object of the present invention to provide improved systems and methods for detecting faults in electric cars.
The inventors of the arrangement described below have appreciated that known electric-vehicle fault detection techniques do not always work well. The high currents used in electric cars, and the magnetic fields that are generated, can cause a substantial amount of noise in the control signals. Even where steps are taken to shield the signal transmission paths, fault detection may be compromised. The inventors have found this to be an especially significant problem in torque control signals, and particularly in high performance electric cars such as track cars, which use highly rated electric motors and motor controllers and/or a relatively high number of electric motors and motor controllers.
The inventors have appreciated that electric-vehicle fault detection based on CRCs and the like may either become oversensitive due to high noise levels, or become desensitized to faults which may be partially or completely masked by high noise levels. The inventors have also appreciated that electric-vehicle fault detection based on the correlation of two signals can be unreliable. For example, fault detection based on a correlation involving a reflected signal may tend to overestimate the difference between the originally transmitted signal and the signal received by the receiver because the reflected signal may have been subject to noise on both its incident and reflected transmission paths. This can cause the fault detection system to be oversensitive and detect faults where none exist. As another example, fault detection based on a correlation of two signals sent via different paths may tend to underestimate the difference between the originally transmitted signal and the signal received by the receiver because both signals may be subject to noise. This can cause the fault detection system to fail to diagnose faults, including those that are actually caused by unacceptably high noise levels.

Embodiments of the present invention provide electric-vehicle fault detection that is effective in the high noise environment of electric cars, and is effective for detecting different kinds of faults, and faults originating from different sources.

The invention is defined in the independent claims to which reference is now directed. Preferred features are detailed in the dependent claims.

According to one aspect of the present invention, there is provided an electric-vehicle fault detection system comprising a first electric-vehicle controller and a second electric-vehicle controller. The first electric-vehicle controller is configured to send a control signal to the second electric-vehicle controller and to send a second signal to the second electric-vehicle controller, the control signal not being a pulse code width modulated signal and the second signal being a pulse width modulated signal comprising the same information as the control signal. The second electric-vehicle controller is configured to receive the control signal and the second signal from the first electric-vehicle controller; compare information from the signals in order to determine a deviation between the signals; and determine whether there is a vehicle fault based on the determined deviation between the signals.

An electric vehicle comprising the electric-vehicle fault detection system is also provided.

According to another aspect of the present invention, there is provided an electric-vehicle fault detection system comprising an electric-vehicle controller. The electric vehicle-controller is configured to receive a control signal and a second signal from another electric-vehicle controller, the control signal being a pulse code width modulated signal and the second signal being a pulse width modulated signal; compare information from the signals in order to determine a deviation between the signals; and determine whether there is a vehicle fault based on the determined deviation between the signals.

According to another aspect of the present invention, there is provided a method of detecting a fault in an electric vehicle. The method comprises: sending a control signal from a first electric-vehicle controller to a second electric-vehicle controller, the control signal not being a pulse code width modulated signal; sending a second signal from the first electric-vehicle controller to the second electric-vehicle controller, the second signal being a pulse width modulated signal comprising the same information as
the control signal; receiving the control signal and the second signal at the second electric-vehicle controller; comparing information from the received signals in order to determine a deviation between the signals; and determining whether there is a vehicle fault based on the determined deviation between the signals.

According to another aspect of the present invention, there is provided a computer program which when executed by one or more computers causes the one or more computers to carry out the method of detecting a fault in an electric vehicle.

According to another aspect of the present invention, there is provided a non-transitory computer readable medium comprising instructions which when executed by one or more computers cause the one or more computers to carry out the method of detecting a fault in an electric vehicle.

The inventors have appreciated that signals that are pulse width modulated are particularly tolerant to the high noise environment of an electric car. That is, although the pulse width modulated second signal is subject to noise, the information content received and interpreted by the second controller will relatively closely match the information content encoded and sent by the first electric-vehicle controller. As a result, and unlike known electric-vehicle fault detection techniques that are based on the comparison of two signals, the determined deviation between the control signal and the second signal closely resembles the actual difference between the information of the control signal as sent by the first electric-vehicle controller and the information of the control signal as received by the second electric-vehicle controller. This provides for effective and reliable electric-vehicle fault detection.

It should be appreciated that while the control signal is a signal used to implement control, the second signal is not used to implement control and is instead used for fault-detection. Further, it should be appreciated that the second signal is not merely a copy, or redundantly calculated version, of the control signal sent via a different route than the control signal. Rather, the second signal represents the same information encoded in the control signal but, unlike the first signal, is encoded in a pulse width modulated form, as the pulse width modulated form is resistant to the high noise environment of an electric car. The control signal may specify a total amount of torque to be delivered to an axle of the vehicle and a left to right torque balance for the two wheels of the axle. The PWM signal, which includes the same information as the CAN message, may specify the total amount of torque to be delivered to each of the two wheels of an axle. That is, the PWM signal may specify said total amount of torque to be delivered to the axle plus or minus said left to right torque balance.

The second electric-vehicle controller may be further configured to adjust a counter based on the determined deviation between the signals, and determining a vehicle fault based on the determined deviation between the signals may comprise determining when the counter passes a predetermined threshold for a vehicle fault. Adjusting the counter based on the determined deviation between the signals may comprise incrementing or decrementing the counter.

Maintaining a counter and adjusting the counter each time a deviation between the two signals is determined allows the electric-vehicle fault detection system to detect different kinds of faults, and to also be more sensitive to faults without becoming oversensitive. For example, some faults may immediately be evident from a large deviation between the signals. Other faults, however, may only cause smaller deviations, but deviations that are nevertheless intolerable from a safety or performance perspective. Setting a predetermined threshold that is sufficiently low to capture both kinds of faults may ordinarily be problematic due the high noise levels, as a briefly high noise level could cause the predetermined threshold to be passed without there actually being any fault. That is, the fault detection system may become oversensitive. Using a counter and a suitable predetermined threshold together allows both kinds of fault to be detected: a fault that causes a large deviation may be quickly identified as the counter almost immediately passes the threshold, and a fault that causes a smaller deviation is identified if its persistence causes the counter to pass the threshold after repeated adjustments of the counter.

An amount by which the counter is incremented or decremented may be based on the determined deviation between the signals. Making the amount by which the counter is adjust a function of the deviation allows the fault detection to be tuned to particular preferences and properties of the electric car, for example based on expected and/or tolerable noise levels in the electric car.

The second electric-vehicle controller may be further configured to adjust the counter at predetermined time intervals, the adjustment comprising the other of incrementing and decrementing the counter. Adjusting the counter at predetermined time intervals may comprise adjusting the counter by a predetermined fixed amount at predetermined time intervals.

Decrementing (or incrementing) the counter at a predetermined suitable rate is particularly useful for differentiating between faults that cause relatively small changes to control signals (that is, faults that do not immediately cause the predetermined threshold to be passed) and noise that is within tolerable levels. For a given electric car, noise exceeding a particular level will not typically persist for a long time. Therefore, provided the counter is decremented (or incremented) at a suitable rate, which may be determined through testing or computer simulation, noise should not cause the counter to pass the predetermined threshold. A fault, however, will typically cause a persistent deviation between the signals, and will therefore eventually cause the counter to pass the predetermined threshold, even if the fault causes a deviation smaller than an average noise level. Although unusually high or persistent noise levels may still cause the counter to pass the predetermined threshold, this may be advantageous because such noise may be unacceptable from a safety or performance perspective.

The control signal may be a torque control signal for controlling the torque delivered by one or more electric motors of an electric vehicle. The electric vehicle may comprise four electric motors, and the torque control signal may be for controlling two of the four electric motors such as a pair of electric motors driving the front wheels (each motor driving one of the front wheels) and the pair of electric motors driving the rear wheels (each motor driving one of the rear wheels).

For safety reasons, it is especially important that faults that cause changes to torque control signals are reliably detected. However, in electric cars, where torque is delivered by electric motors, torque control signals are often affected by noise more significantly than other control signals. This is because the components that send and/or receive torque control signals are more likely to be in the vicinity of the electric motors, which produce relatively large and quickly changing magnetic fields. The inventors have found this to be a particular issue in high performance electric cars with four electric motors. The electric-vehicle fault detection systems and methods provided by the present invention are therefore particularly relevant in the context of torque control systems, and in the context of electric cars with four electric motors.

The second electric-vehicle controller may be further configured to initiate a safe mode in response to determining a vehicle fault. The safe mode may be a limp mode of the electric vehicle, such as to limit the maximum speed of the electric vehicle.

The first electric-vehicle controller may be configured to send the control signal to the second electric-vehicle controller over a first connection and to send the second signal to the second electric-vehicle controller over a second connection.

Sending the signals over different connections improves the identification of faults in the first electric-vehicle controller, particularly those caused by incorrect encoding of instructions by the first electric-vehicle controller. Such a fault may be difficult to detect if both signals are sent over the same connection because both the signals may be affected, to a greater or lesser extent, by the fault. Sending the same information via two different connections may improve the detection of such faults, as it is unlikely that both signals will be affected by the fault.

The first electric-vehicle controller may be configured to send control signals over the first connection at a first rate and to send second signals over the second connection at a second rate, the first rate being greater than the second rate.

Sending the second signals at a lower rate than the control signals reduces the computational requirements of the electric-vehicle fault detection system and/or allows the control signals to be sent at a higher rate than they otherwise could be given limitations on computational power, thus allowing finer control of the electric car.

The control signal, which is not be a pulse width modulated signal, may be a Controller Area Network (CAN) message. In this way, the electric-vehicle fault detection systems and methods of the present invention can be applied to existing systems which make use of the CAN standard. The CAN message may specify a total amount of torque to be delivered to an axle of the vehicle and a left to right torque balance for the left and right wheels associated with the axle. The PWM signal, which includes the same information as the CAN message, may specify the total amount of torque to be delivered to the left and right wheels of the axle. That is, said total amount of torque to be delivered to the axle either plus or minus said left to right torque balance.

### BRIEF DESCRIPTION OF THE DRAWINGS

The invention will be described in more detail, by way of example, with reference to the accompanying drawings, in which:
Figure 1 (prior art) is a schematic diagram illustrating a known electric-vehicle fault detection system;
Figure 2 is a schematic diagram illustrating a simplified view of an electric-vehicle fault detection system embodying an aspect of the present invention; and
Figure 3 is a flow chart illustrating a method of detecting a fault using the system of Figure 2.

### DETAILED DESCRIPTION OF PREFERRED EMBODIMENTS

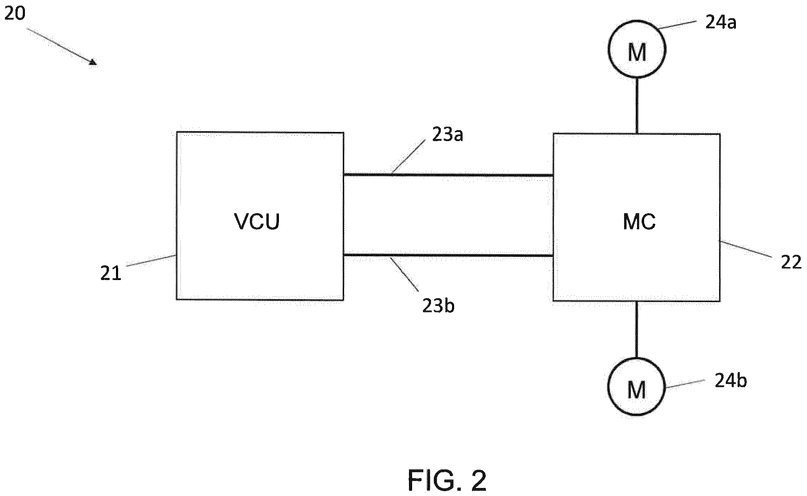

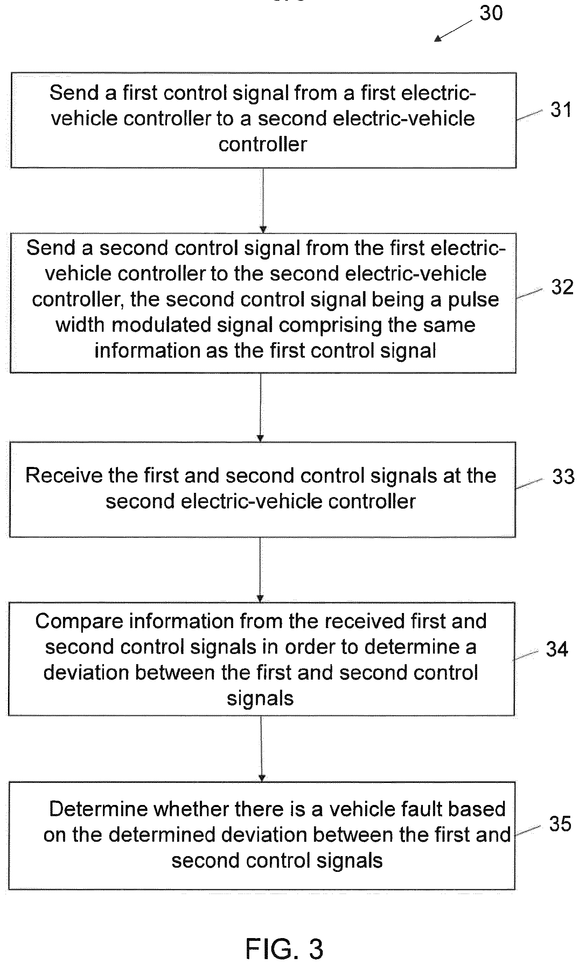

An example of an electric-vehicle fault detection system 20 will now be described with reference to Figures 2 and 3.

As can be seen from Figure 2, an electric-vehicle fault detection system 20 includes a first controller 21 in the form of a VCU, a second controller 22 in the form of an MC and two electrical communication connections 23a, 23b between the VCU and MC. Signals can be sent between the VCU 21 and the MC 22 over the connections 23a, 23b. The signals carry information for controlling components of the electric car, such as electric motors 24a, 24b.

While Figure 2 shows one VCU 21 sending signals to one MC 22 that is controlling two electric motors 24a, 24b, it should be appreciated that this is only an example. An electric car can have a different number of electric motors, and there can be one MC per electric motor, or electric motors may share MCs as in Figure 2. For example, a high-performance electric car such as a track car may have four electric motors each driving a wheel of the car so as to provide drive to all four wheels, with the VCU in communication with two MCs, each of the two MCs controlling a pair of electric motors, one pair of motors for driving the front wheels (one motor of the pair driving each front wheel) and the other pair of motors driving the rear wheels (one motor or the pair driving each rear wheel).

The VCU 21 receives inputs from one or more sensors, actuators and/or other controllers (not shown), encodes signals based on the inputs it receives, and then sends the signals to the MC 22.

In some cases, the VCU 21 receives inputs and then computes instructions based on the inputs, and then encodes and sends the instructions as signals to the MC 22. For example, the VCU 21 may receive an input via an accelerator pedal, determine instructions for controlling electric motors 24a, 24b based on the input received from the accelerator pedal, and encode and send signals based on the determined instructions.

In other cases, the VCU 21 may simply receive an input and effectively forward the input to the MC 22 by encoding and sending a signal based on the input. For example, the VCU may receive an input from the accelerator pedal and then encode and send a signal to the MC 22 for the MC to use, without determining instructions. In other cases still, the VCU 21 may not receive inputs from an accelerator pedal, for example, and instead essentially act as an intermediary between the MC 22 and another controller (not shown). That is, the VCU 21 may simply route signals it receives to one or more other controllers, including MC 22. What is important is that VCU 21 sends signals to the MC 22.

The MC 22 receives signals from the VCU 21 and processes the signals. Processing the signals includes fault detection based on the signals it receives from the VCU 21, as will be explained in more detail below. Optionally, the processing may further include forwarding the signals to one or more other controllers (not shown), and/or interpreting the signals to determine instructions to execute. For example, if the signals received by the MC 22 are based on an input received via an accelerator pedal, the second controller 22 may interpret the signal to determine instructions and execute the instructions so as to cause the desired amount of power to be delivered to, or torque to be delivered by, the electric motors 24a, 24b.

It should be appreciated that the VCU 21 and MC 22 shown in Figures 2 are simplified for illustration, and that each of the controllers may include a plurality of sub-components. For example, while Figure 2 shows the MC 22 as a single block connected directly to two electric motors 24a, 24b, it will be appreciated that in practice this single block will include multiple sub-components that together have the necessary functionality to receive the signals, process them and deliver the desired amount of power to the motors 24a, 24b. The MC will include a first sub-component that interfaces with the one or more connections 23a, 23b in order to receive the signals, one or more sub-components, which may be the same as or in addition to the first sub-component, that processes the received signals to determine instructions and perform fault detection, and one or more sub-components which co-operate to deliver the desired amount of the power to the electric motors 24a, 24b based on the instructions. For example, the single block of the MC 22 may include one or more inverters that receive direct current (DC) from one or more batteries of the electric vehicle and convert it to alternating current (AC) and one or more motor controllers that directly or indirectly receive AC from the inverters and deliver current to the electric motors 24a, 24b.

Therefore, the sub-components that form the VCU 21 are together configured to send signals to the MC 22 over the connections 23a, 23b, and the sub-components that form the MC 22 are together configured to receive the control signals and perform fault detection, as will now be described.

The VCU 21 is configured to send a control signal to the MC 22 over one of the connections 23a, 23b. The VCU 21 is further configured to send a second signal that includes the same information included in the control signal to the MC 22 over the other of the connections 23a, 23b. Unlike the control signal, the second signal is a pulse width modulated (PWM) signal. The MC 22 is configured to receive the control signal and the second signal, compare information from the signals in order to determine a deviation between the signals, and determine whether there is a fault based at least in part on the determined deviation.

The control signal is a signal that is intended for use by the electric car to communicate control information and implement control. While the second signal includes the same information, the second signal is an observer signal not used to implement control, and is instead only used for fault detection.

In the example of Figure 2, the control signal is a CAN message specifying the total amount of torque to be delivered to an axle of the vehicle, and a left to right torque balance to be applied to the left and right wheels associated with the axle. The amount of torque to be delivered to the left wheel and the right wheel is then said total amount of torque plus or minus the left to right torque balance. In the example of Figure 2, the second, pulse width modulated, signal specifies the amount of torque to be delivered to each of the left and right wheels associated with the axle. That is, rather than specifying a total torque and a balance adjustment, the second signal specifies the actual torques to be delivered to the left and right wheels. In this way the control signal and second signal include the same information, although the information is specified in a different way and in different signal formats.

Since the signals sent by the VCU 21 and received by the MC 22 are of different signal formats, comparing information from the signals may involve first processing the signals into forms in which information from the signals can more readily be compared. Signal comparison techniques known in the art can then be used in order to determine a deviation between the signals. For example, the second controller may perform a cross-correlation, convolution or another suitable signal comparison technique in order to determine a deviation between the signals.

The PWM signal has been found to be particularly tolerant to the high noise environment of an electric car. That is, although the PWM signal is subject to noise, the information content received and interpreted by the MC 22 will relatively closely match the information content encoded and sent by the VCU 21. As a result, and unlike known electric-vehicle fault detection techniques that are based on the comparison of two signals, the determined deviation between the signals closely resembles the actual difference between the information of the control signal as sent by the VCU21 and the information of the control signal as received by the MC 22.

In order to determine whether there is a fault, the MC 22 is configured to maintain a counter and adjust the counter based on the determined deviation between the signals. For example, the second controller may be configured to increment (or decrement) the counter if the deviation is over a predefined amount, or to increment (or decrement) the counter by an amount that is based on the size of the deviation that is determined. The MC 22 determines there is a fault when the counter passes a predetermined threshold for a fault. Such a threshold can be determined based on testing of the electric car or by computer simulation, for example.

Maintaining a counter and adjusting the counter each time a deviation between the two control signals is determined allows the electric-vehicle fault detection system to detect different kinds of faults, and to also be more sensitive to faults without becoming oversensitive. For example, some faults may immediately be evident from a large deviation between the signals. Other faults, however, may only cause smaller deviations, but deviations that are nevertheless intolerable from a safety or performance perspective. Setting a predetermined threshold that is sufficiently low to capture both kinds of faults may ordinarily be problematic due the high noise levels, as a briefly high noise level could cause the predetermined threshold to be passed without any fault. That is, the fault detection system may become oversensitive. Using a counter and a suitable predetermined threshold together allows both kinds of fault to be detected: a fault that causes a large deviation may be quickly identified as the counter almost immediately passes the threshold, and a fault that causes a smaller deviation is identified because if its persistence causes the counter to pass the threshold after repeated adjustments of the counter.

The MC 22 is further configured to decrement (or increment) the counter at a predetermined rate, for example by a predetermined fixed amount at predetermined time intervals.

Decrementing (or incrementing) the counter at a predetermined suitable rate is particularly useful for differentiating between faults that cause relatively small deviations (that is, faults that do not immediately cause the predetermined threshold to be passed) and noise that is within tolerable levels. For a given electric car, noise exceeding a particular level will not typically persist for a long time. Therefore, provided the counter is decremented (or incremented) at a suitable rate, which may be determined through testing or computer simulation, noise should not cause the counter to pass the predetermined threshold. A fault, however, which will typically cause a persistent deviation between the signals, will eventually cause the counter to pass the predetermined threshold, even if the fault causes a deviation smaller than an average noise level.

In some cases, a fault can cause a change in the control signal that is sufficiently small that it can be tolerated, even over a sustained time. Conversely, in some cases noise can be large enough or sustained enough to cause changes in the control signals that are intolerable. It will be appreciated that by choosing suitable predetermined thresholds and amounts and rates by which the counter is adjusted, it is possible to achieve a well-refined electric-vehicle fault detection system that can identify and differentiate between intolerable faults and noise levels and tolerable faults and noise levels.

If the electric-vehicle fault detection system 20 detects a fault, it may initiate a safe mode. For example, the MC 22 may initiate a mode that prevents any power being delivered to the electric motors, or initiate a limp mode in which the maximum speed of the electric vehicle is limited, or where a maximum amount of power delivered to or torque delivered by one or more electric motors is limited.

The VCU 21 may send the control signals and second, PWM, signals to the MC 22 at different rates. As explained previously, the control signal is used to communicate control information and implement control of the electric car, whereas the second signal is only used for fault detection. By sending the second signals at a lower rate than the control signals, for example by only sending a second single for every fifth control signal, the computational requirements of the fault detection system 20 are reduced. Alternatively or additionally, it allows the control signals to be sent at a higher rate than they otherwise could be given limitations on computational power, thus allowing finer control of the electric vehicle. By way of a specific example, the control signals may be CAN messages sent at 200Hz, whereas the second, pulse width modulated, signals may be sent at lower frequencies that are integer fractions of the control signal frequency of, in this example, 200Hz, such as 10Hz, 20Hz, 40Hz, 50Hz or 100Hz.

If the signals are sent at different rates, the amount and/or rate by which the counter is decremented (or incremented) should take into account the relative rates, as this will to some extent determine how quickly the counter is incremented (or decremented) due to the determined deviations between the signals.

Although it has been described that the control signals and the second signals are sent over two separate connections 23a, 23b, the control signals and second signals could be sent over the same connection. However, it is advantageous to send the signals over two separate connections. In some cases, the information decoded by the second controller 22 may not match the intended information if a fault causes the first controller 21 to encode the intended information incorrectly. Where both the control signal and the second, pulse width modulated, signal are sent over the same connection, such a fault may be difficult to detect because both the control signal and the second signal may be affected, to a greater or lesser extent, by the fault. Sending the same information via two different connections 23a, 23b may improve the detection of such faults, as it is unlikely that both signals will be affected by the fault.

Where the control signal and second signal are sent over two separate connections, the control signal may be a CAN message sent over a CAN bus. That is, one of the connections 23a, 23b may form part of a CAN bus. In this case, the comparison of information from the signals may involve processing the CAN message and PWM signal into a form in which information comprised in the two signals can be compared.

As an alternative to maintaining a counter, the MC 22 may instead be configured to determine whether there is fault by determining whether the determined deviation passes a predetermined threshold. The predetermined threshold may be an amount over which a deviation between the signals is unacceptable from a safety or performance perspective. Such a threshold can be determined based on testing of the electric vehicle, or computer simulations, for example.

Figure 3 is a flow diagram illustrating a method 30 of detecting a fault in an electric car.

Firstly, in step 31, a VCU sends a control signal to an MC. As explained above, the control signal, which may be a CAN message, is a control signal used by the system to communicate control information and to implement control of the electric car.

Next, in step 32, the VCU sends a second signal to the MC, the control signal being a pulse width modulated signal comprising the same information as the control signal. As explained above, the second signal, sent over a different connection to the control signal, is an observer signal for use in fault detection and not to implement control of the electric car. This second signal may be sent at a lower rate than the control signal sent in step 32.

Next, in step 33, the MC receives the control signal and the second signals.

Next, in step 34, the MC compares information from the received signals in order to determine a deviation between the signals. The comparison can involve any suitable signal comparison technique known in the art, such as cross-correlation or convolution. Since the signals are of different signal forms, the signals may be processed into a common form before they are compared.

Finally, in step 35, the MC determines whether there is a fault based on the determined deviation between the signals. As described above, the method may involve maintaining and adjusting a counter based on the determined deviation, and determining a fault when the counter passes a predetermined threshold for a vehicle fault.

If a fault is detected, the method 30 may further comprise initiating a safe mode. For example, the MC may initiate a mode that prevents any power being delivered to the electric motors, or initiate a limp mode in which the maximum speed of the electric vehicle is limited, or where a maximum amount of power delivered to or torque delivered by one or more electric motors is limited.

A computer program, and a non-transitory computer readable medium, comprising instructions which when executed by one or more computers causes the one or more computers to carry out the method 30 may also be provided. It will be understood that a non-transitory computer readable medium may include media such as, but not limited to, a CD-ROM, a DVD-ROM, a USB storage device, flash memory and a hard disk drive.

## Claims

1. An electric-vehicle fault detection system (20) comprising a first electric-vehicle controller (21) and a second electric-vehicle controller (22):
the first electric-vehicle controller (21) being configured to send a control signal to the second electric-vehicle controller (22) and to send a second signal to the second electric-vehicle controller (22), and
the second electric-vehicle controller (22) being configured to receive the control signal and the second signal from the first electric-vehicle controller (21); compare information from the signals in order to determine a deviation between the signals; and determine whether there is a vehicle fault based on the determined deviation between the signals,
**characterised in that** the control signal is not a pulse width modulated signal and the second signal is a pulse width modulated signal comprising the same information as the control signal.

2. An electric-vehicle fault detection system (20) according to claim 1, wherein the second electric-vehicle controller (22) is further configured to adjust a counter based on the determined deviation between the signals, and wherein determining a vehicle fault based on the determined deviation between the signals comprises determining when the counter passes a predetermined threshold for a vehicle fault.

3. An electric-vehicle fault detection system (20) according to claim 2, wherein adjusting the counter based on the determined deviation between the signals comprises incrementing or decrementing the counter.

4. An electric-vehicle fault detection system (20) according to claim 3, wherein an amount by which the counter is incremented or decremented is based on the determined deviation between the signals.

5. An electric-vehicle fault detection system (20) according to claim 3 or claim 4, wherein the second electric-vehicle controller (22) is further configured to adjust the counter at predetermined time intervals, the adjustment comprising the other of incrementing and decrementing the counter.

6. An electric-vehicle fault detection system (20) according to claim 5, wherein adjusting the counter at predetermined time intervals comprises adjusting the counter by a predetermined fixed amount at predetermined time intervals.

7. An electric-vehicle fault detection system (20) according to any preceding claim, wherein the control signal is a torque control signal for controlling the torque delivered by one or more electric motors (24a, 24b) of an electric vehicle.

8. An electric-vehicle fault detection system (20) according to claim 7, wherein the control signal specifies a total amount of torque to be delivered to an axle of the electric vehicle and a left to right torque balance for left and right wheels associated with said axle.

9. An electric-vehicle fault detection system (20) according to claim 8, wherein the second signal specifies a total amount of torque to be delivered to each of said left and right wheels associated with said axle.

10. An electric-vehicle fault detection system (20) according to any preceding claim, wherein the first electric-vehicle controller (21) is configured to send the control signal to the second electric-vehicle controller (22) over a first connection (23a) and to send the second signal to the second electric-vehicle controller (22) over a second connection (23b), and wherein the first electric-vehicle controller (21) is configured to send signals over the first connection (23a) at a first rate and to signals over the second connection (23b) at a second rate, the first rate being greater than the second rate.

11. An electric-vehicle fault detection system (20) according to any preceding claim, wherein the control signal is a Controller Area Network (CAN) message.

12. An electric vehicle comprising an electric-vehicle fault detection system according to any of claims 1 to 11.

13. A method (30) of detecting a fault in an electric vehicle, the method comprising:
sending (31) a control signal from a first electric-vehicle controller (21) to a second electric-vehicle controller (22),
sending (32) a second signal from the first electric-vehicle controller (21) to the second electric-vehicle controller (22),
receiving (33) the control signal and the second signal at the second electric-vehicle controller (22);
comparing (34) information from the received signals in order to determine a deviation between the signals; and
determining (35) whether there is a vehicle fault based on the determined deviation between the signals,
**characterised in that** the control signal is not a pulse width modulated signal and the second signal is a pulse width modulated signal comprising the same information as the control signal.

14. A computer program which when executed by one or more computers causes the one or more computers to carry out the method (30) of claim 13.

## Patentansprüche

1. System (20) zum Erkennen von Fehlern in einem Elektrofahrzeug, das eine erste Elektrofahrzeugsteuerung (21) und eine zweite Elektrofahrzeugsteuerung (22) umfasst;
wobei die erste Elektrofahrzeugsteuerung (21) zum Senden eines Steuersignals zur zweiten Elektrofahrzeugsteuerung (22) und zum Senden eines zweiten Signals zur zweiten Elektrofahrzeugsteuerung (22) konfiguriert ist, und
wobei die zweite Elektrofahrzeugsteuerung (22) zum Empfangen des Steuersignals und des zweiten Signals von der ersten Elektrofahrzeugsteuerung (21) konfiguriert ist; Vergleichen von Informationen aus den Signalen, um eine Abweichung zwischen den Signalen zu bestimmen; und Feststellen auf der Basis der bestimmten Abweichung zwischen den Signalen, ob es einen Fahrzeugfehler gibt,
**dadurch gekennzeichnet, dass** das Steuersignal kein pulsbreitenmoduliertes Signal ist und das zweite Signal ein pulsbreitenmoduliertes Signal ist, das dieselben Informationen umfasst wie das Steuersignal.

2. System (20) zum Erkennen von Fehlern in einem Elektrofahrzeug nach Anspruch 1, wobei die zweite Elektrofahrzeugsteuerung (22) ferner zum Justieren eines Zählers auf der Basis der bestimmten Abweichung zwischen den Signalen konfiguriert ist und wobei das Bestimmen eines Fahrzeugfehlers auf der Basis der bestimmten Abweichung zwischen den Signalen das Feststellen beinhaltet, wenn der Zähler eine vorbestimmte Schwelle für einen Fahrzeugfehler überschreitet.

3. System (20) zum Erkennen von Fehlern in einem Elektrofahrzeug nach Anspruch 2, wobei das Justieren des Zählers auf der Basis der bestimmten Abweichung zwischen den Signalen das Inkrementieren oder Dekrementieren des Zählers beinhaltet.

4. System (20) zum Erkennen von Fehlern in einem Elektrofahrzeug nach Anspruch 3, wobei ein Betrag, um den der Zähler inkrementiert oder dekrementiert wird, auf der bestimmten Abweichung zwischen den Signalen basiert.

5. System (20) zum Erkennen von Fehlern in einem Elektrofahrzeug nach Anspruch 3 oder Anspruch 4, wobei die zweite Elektrofahrzeugsteuerung (22) ferner zum Justieren des Zählers in vorbestimmten Zeitintervallen konfiguriert ist, wobei die Justierung das jeweils andere aus Inkrementieren und Dekrementieren des Zählers beinhaltet.

6. System (20) zum Erkennen von Fehlern in einem Elektrofahrzeug nach Anspruch 5, wobei das Justieren des Zählers in vorbestimmten Zeitintervallen das Justieren des Zählers um einen vorbestimmten festen Betrag in vorbestimmten Zeitintervallen beinhaltet.

7. System (20) zum Erkennen von Fehlern in einem Elektrofahrzeug nach einem vorherigen Anspruch, wobei das Steuersignal ein Drehmomentsteuersignal zum Steuern des von einem oder mehreren Elektromotoren (24a, 24b) eines Elektrofahrzeugs gelieferten Drehmoments ist.

8. System (20) zum Erkennen von Fehlern in einem Elektrofahrzeug nach Anspruch 7, wobei das Steuersignal einen Gesamtbetrag an einer Achse des Elektrofahrzeugs zuzuführendem Drehmoment und einen Links-nach-Rechts-Drehmomentausgleich für mit der genannten Achse assoziierte linke und rechte Räder vorgibt.

9. System (20) zum Erkennen von Fehlern in einem Elektrofahrzeug nach Anspruch 8, wobei das zweite Signal einen Gesamtbetrag an jedem der genannten, mit der genannten Achse assoziierten linken und rechten Räder zuzuführendem Drehmoment vorgibt.

10. System (20) zum Erkennen von Fehlern in einem Elektrofahrzeug nach einem vorherigen Anspruch, wobei die erste Elektrofahrzeugsteuerung (21) zum Senden des Steuersignals zur zweiten Elektrofahrzeugsteuerung (22) über eine erste Verbindung (23a) und zum Senden des zweiten Signals zur zweiten Elektrofahrzeugsteuerung (22) über eine zweite Verbindung (23b) konfiguriert ist, und wobei die erste Elektrofahrzeugsteuerung (21) zum Senden von Signalen über die erste Verbindung (23a) mit einer ersten Rate und zum Senden von Signalen über die zweite Verbindung (23b) mit einer zweiten Rate konfiguriert ist, wobei die erste Rate höher ist als die zweite Rate.

11. System (20) zum Erkennen von Fehlern in einem Elektrofahrzeug nach einem vorherigen Anspruch, wobei das Steuersignal eine CAN-(Controller Area Network)-Nachricht ist.

12. Elektrofahrzeug, das ein System zum Erkennen von Fehlern in einem Elektrofahrzeug nach einem der Ansprüche 1 bis 11 umfasst.

13. Verfahren (30) zum Erkennen eines Fehlers in einem Elektrofahrzeug, wobei das Verfahren Folgendes beinhaltet:
Senden (31) eines Steuersignals von einer ersten Elektrofahrzeugsteuerung (21) zu einer zweiten Elektrofahrzeugsteuerung (22),
Senden (32) eines zweiten Signals von der ersten Elektrofahrzeugsteuerung (21) zur zweiten Elektrofahrzeugsteuerung (22),
Empfangen (33) des Steuersignals und des zweiten Signals an der zweiten Elektrofahrzeugsteuerung (22);
Vergleichen (34) von Informationen von den empfangenen Signalen, um eine Abweichung zwischen den Signalen zu bestimmen; und
Feststellen (35) auf der Basis der bestimmten Abweichung zwischen den Signalen, ob es einen Fahrzeugfehler gibt,
**dadurch gekennzeichnet, dass** das Steuersignal kein pulsbreitenmoduliertes Signal ist und das zweite Signal ein pulsbreitenmoduliertes Signal ist, das dieselben Informationen umfasst wie das Steuersignal.

14. Computerprogramm, das bei Ausführung durch einen oder mehrere Computer bewirkt, dass die ein oder mehreren Computer das Verfahren (30) nach Anspruch 13 durchführen.

## Revendications

1. Système de détection de panne de véhicule électrique (20) comprenant un premier contrôleur de véhicule électrique (21) et un deuxième contrôleur de véhicule électrique (22) :
le premier contrôleur de véhicule électrique (21) étant configuré pour envoyer un signal de commande au deuxième contrôleur de véhicule électrique (22) et envoyer un deuxième signal au deuxième contrôleur de véhicule électrique (22), et
le deuxième contrôleur de véhicule électrique (22) étant configuré pour recevoir le signal de commande et le deuxième signal du premier contrôleur de véhicule électrique (21) ; comparer les informations des signaux afin de déterminer une déviation entre les signaux ; et déterminer s'il y a une panne de véhicule sur la base de la déviation déterminée entre les signaux,
**caractérisé en ce que** le signal de commande n'est pas un signal modulé en largeur d'impulsion et que le deuxième signal est un signal modulé en largeur d'impulsion comprenant les mêmes informations que le signal de commande.

2. Système de détection de panne de véhicule électrique (20) selon la revendication 1, dans lequel le deuxième contrôleur de véhicule électrique (22) est configuré en outre pour régler un compteur sur la base de la déviation déterminée entre les signaux, et où déterminer une panne de véhicule sur la base de la déviation déterminée entre les signaux comprend déterminer quand le compteur franchit un seuil prédéterminé pour une panne de véhicule.

3. Système de détection de panne de véhicule électrique (20) selon la revendication 2, dans lequel régler le compteur sur la base de la déviation déterminée entre les signaux comprend incrémenter ou décrémenter le compteur.

4. Système de détection de panne de véhicule électrique (20) selon la revendication 3, dans lequel un montant duquel le compteur est incrémenté ou décrémenté est basé sur la déviation déterminée entre les signaux.

5. Système de détection de panne de véhicule électrique (20) selon la revendication 3 ou la revendication 4, dans lequel le deuxième contrôleur de véhicule électrique (22) est configuré en outre pour régler le compteur à des intervalles de temps prédéterminés, le réglage comprenant l'autre d'entre incrémenter et décrémenter le compteur.

6. Système de détection de panne de véhicule électrique (20) selon la revendication 5, dans lequel régler le compteur à des intervalles de temps prédéterminés comprend régler le compteur d'un montant fixe prédéterminé à des intervalles de temps prédéterminés.

7. Système de détection de panne de véhicule électrique (20) selon l'une quelconque des revendications précédentes, dans lequel le signal de commande est un signal de commande de couple pour contrôler le couple fourni par un ou plusieurs moteurs électriques (24a, 24b) d'un véhicule électrique.

8. Système de détection de panne de véhicule électrique (20) selon la revendication 7, dans lequel le signal de commande spécifie un taux total de couple à fournir à un essieu du véhicule électrique et un équilibre de couple de gauche à droite pour les roues gauche et droite associées audit essieu.

9. Système de détection de panne de véhicule électrique (20) selon la revendication 8, dans lequel le deuxième signal spécifie un taux total de couple à fournir à chacune desdites roues gauche et droite associées audit essieu.

10. Système de détection de panne de véhicule électrique (20) selon l'une quelconque des revendications précédentes, dans lequel le premier contrôleur de véhicule électrique (21) est configuré pour envoyer le signal de commande au deuxième contrôleur de véhicule électrique (22) sur une première connexion (23a) et envoyer le deuxième signal au deuxième contrôleur de véhicule électrique (22) sur une deuxième connexion (23b), et où le premier contrôleur de véhicule électrique (21) est configuré pour envoyer des signaux sur la première connexion (23a) à une première cadence et envoyer des signaux sur la deuxième connexion (23b) à une deuxième cadence, la première cadence étant plus grande que la deuxième cadence.

11. Système de détection de panne de véhicule électrique (20) selon l'une quelconque des revendications précédentes, dans lequel le signal de commande est un message Controller Area Network (CAN).

12. Véhicule électrique comprenant un système de détection de panne de véhicule électrique selon l'une quelconque des revendications 1 à 11.

13. Procédé (30) de détection d'une panne dans un véhicule électrique, le procédé comprenant :
envoyer (31) un signal de commande d'un premier contrôleur de véhicule électrique (21) à un deuxième contrôleur de véhicule électrique (22),
envoyer (32) un deuxième signal du premier contrôleur de véhicule électrique (21) au deuxième contrôleur de véhicule électrique (22),
recevoir (33) le signal de commande et le deuxième signal au deuxième contrôleur de véhicule électrique (22) ;
comparer (34) les informations provenant des signaux reçus afin de déterminer une déviation entre les signaux ; et
déterminer (35) s'il y a une panne de véhicule sur la base de la déviation déterminée entre les signaux,
**caractérisé en ce que** le signal de commande n'est pas un signal modulé en largeur d'impulsion et que le deuxième signal est un signal modulé en largeur d'impulsion comprenant les mêmes informations que le signal de commande.

14. Programme informatique qui, lorsque exécuté par un ou plusieurs ordinateurs, fait que l'un ou les plusieurs ordinateurs mettent en oeuvre le procédé (30) selon la revendication 13.
